# EUROPEAN PATENT APPLICATION

(11) **EP 3 922 601 A1**
(43) Date of publication of application: **15.12.2021**
(21) Application number: 20821107.8
(22) Date of filing: 06.10.2020
(51) Int. Cl.: C01B 33/113, C01B 33/20, C23C 14/10, C23C 14/24, H01M 4/48, H01M 10/052

(54) **APPARATUS AND METHOD FOR PRODUCING SILICON OXIDES, AND SILICON OXIDE NEGATIVE ELECTRODE MATERIAL**

(30) Priority: 16.04.2020 KR 20200045801
(71) Applicant: Tera Technos Co., Ltd., Yuseong-gu Daejeon 34015 (KR)
(72) Inventor: LEE, Jae Woo, Sejong 30152 (KR); PARK, Jin Gee, Daegu 42287 (KR); CHOI, Sun Ho, Sejong 30150 (KR); CHEON, Jung Hoon, Sejong 30153 (KR)
(74) Representative: Cabinet Chaillot
(86) International application number: PCT/KR2020/013529
(87) International publication number: WO 2021/210739

(57) **Abstract**

The present invention relates to a device and a method of preparing a SiOx, and a SiOx anode material, and more particularly, to a device and a method of preparing a SiOx, in which a SiOx is prepared by reacting liquid silicon and solid silicon dioxide in one or more crucibles, and a metal raw material is simultaneously supplied during SiOx preparing to continuously prepare a metal-SiOx in a single process, and a SiOx anode material.

## Description

### [Technical Field]

This specification claims priority to and the benefit of Korean Patent Application No. 10-2020-0045801 filed in the Korean Intellectual Property Office on April 16, 2020, the entire contents of which are incorporated herein by reference.

The present invention relates to a device and a method of preparing a SiOx, and a SiOx anode material, and more particularly, to a device and a method of preparing a SiOx, in which a SiOx is prepared by reacting liquid silicon and solid silicon dioxide in one or more crucibles, and a metal raw material is simultaneously supplied during SiOx preparation to continuously prepare a metal-SiOx in a single process, and a SiOx anode material.

### [Background Art]

From small electronic devices, such as mobile (IT) devices to middle to large-sized devices, such as Electric Vehicles (EVs) and Energy Storage Devices (ESSs), demands for power storage device are increasing rapidly. Particularly, the technology development and the demands for a lithium secondary battery are increasing rapidly, and a lithium secondary battery having higher energy density than that of the related art is demanded. In order to increase energy density, research and development are in progress for increasing the capacity of a cathode material and an anode material, increasing density of an electrode plate, thinning a separation membrane, increasing charging/discharging voltage, and the like, and recently, research and development is being concentrated in the direction of increasing the capacity of cathode and anode materials.

The anode material of the lithium secondary battery receives electrons and lithium ions during charging and emits electrons and lithium ions to a positive electrode during discharging. In order to use a material as the anode material, stability, electric conductivity, low chemical reactivity, price competitiveness, and storage capacity need to be excellent. The material used as the anode material includes natural graphite, artificial graphite, metal-based material, a carbon-based material, and a silicon-based material, and the development of the silicon-based material that is most advantageous for high capacity is actively progressing. The silicon-based material has a theoretical capacity of 4,200 mAh/g, which is several times higher than the theoretical capacity of the graphite-based anode material, which is 372 mAh/g, attracting attention as a next-generation material to replace the existing anode material. However, the silicon-based material changes its crystal structure according to an insertion of lithium ions during charging, and has a volume expansion of about four times compared to a volume before the lithium is inserted. Accordingly, the silicon-based material cannot resist the volume change according to the repetition of the charging/discharging, so that cracks are generated and particles are destructed inside the crystal, and an electrical connection between the adjacent particles deteriorates, resulting in degrading life characteristics.

In order to solve the disadvantage, research for improving life characteristics and alleviating volume expansion by using a SiOx (SiOx) was conducted, but the SiOx forms an irreversible product while lithium is inserted during charging/discharging, so that there is a problem in that lithium is depleted and initial reversible efficiency (I.C.E) is decreased.

In the meantime, the SiOx in the related art is prepared by a method of heating and vaporizing silicon powder and silicon dioxide powder in a high-temperature vacuum state and then cooled, precipitated, and collected. However, in the case where the SiOx is prepared by the solid state-solid state reaction, there is a problem in that a continuous process is difficult, and reactivity is low, so that the amount of SiOx prepared is decreased.

Further, in the case where a metal-SiOx is prepared in which a metal is doped in a SiOx, an additional process of doping a metal after the SiOx is prepared is required. Accordingly, there is a problem in that a production speed and production costs increase.

### [Detailed Description of the Invention]

### [Technical Problem]

The present invention is conceived to solve the foregoing problems, and an object of the present invention is to provide a device and a method of preparing a SiOx which are capable of continuously preparing a SiOx by a liquid-solid reaction of liquid silicon and a solid silicon dioxide to improve the amount of SiOx prepared.

Another object of the present invention is to provide a device and a method of preparing a SiOx which are capable of simplifying a metal-SiOx preparing process by simultaneously reacting metal gas while preparing the SiOx.

Still another object of the present invention is to provide a SiOx anode material which is capable of improving initial reversible efficiency and capacity of a lithium secondary battery.

### [Technical Solution]

An exemplary embodiment of the present invention provides a device for preparing a SiOx, including: one or more crucibles configured to provide a space in which a raw material is accommodated; a reaction unit inside where the crucible is located; a heater configured to heat the reaction unit; and a deposition unit configured to deposit a gas generated in the reaction unit, in which the raw material is liquid silicon and solid silicon dioxide, and SiOx gas is generated by a liquid-solid reaction of the liquid silicon and the solid silicon dioxide, and a pore area of the solid silicon dioxide in a pore size range of 1.7 nm to 300 nm calculated through a Barrett-Joyner-Halenda (BJH) gas phase adsorption-desorption analysis is 200 m²/g or more and an average pore size of the analyzed through desorption solid silicon dioxide after the BJH gas phase adsorption is 5 nm or less.

The device may further include a metal chamber in which a metal raw material is located, in which the metal raw material is metal and/or a metal compound, and the metal raw material is phase-transited to metal gas by heating, and metal-SiOx gas is generated by reacting the metal gas and the SiOx gas.

Further, the metal includes one or more of silicon, aluminum, calcium, potassium, lithium, magnesium, zirconium, nickel, manganese, zinc, and sodium, and the metal compound is one or more selected from the group consisting of oxides, hydroxides, carbonates, and organometallic precursors of a metal element including one or more of silicon, aluminum, calcium, potassium, lithium, magnesium, zirconium, nickel, manganese, zinc, and sodium.

Further, the solid silicon dioxide has a specific surface area of 300 m²/g or more.

Further, the solid silicon dioxide has a diameter of 0.5 mm to 100 mm.

Further, the crucible is stacked in one or more stages in a vertical direction.

Further, the liquid silicon is formed by phase transiting solid silicon by heating.

Another exemplary embodiment of the present invention provides a method of preparing a SiOx, including: (a) preparing liquid silicon in a crucible inside a reaction unit; (b) supplying solid silicon dioxide to the crucible, in which a pore area of the solid silicon dioxide in a pore size range of 1.7 nm to 300 nm calculated through a Barrett-Joyner-Halenda (BJH) gas phase adsorption-desorption analysis is 200 m²/g or more and an average pore size of the analyzed through desorption solid silicon dioxide after the BJH gas phase adsorption is 5 nm or less; (c) generating SiOx gas by liquid-solid reacting the liquid silicon and the solid silicon dioxide; and (d) depositing the SiOx gas in a deposition unit.

Further, the solid silicon dioxide has a specific surface area of 300 m²/g or more.

Further, the solid silicon dioxide has a diameter of 0.5 mm to 100 mm.

Further, in operation (d), the SiOx gas is deposited at a temperature of 500°C to 1,200°C, and the SiOx gas is SiOₓ (x is 0.6 to 1.1).

Still another exemplary embodiment of the present invention provides a method of preparing a SiOx, including: (a) preparing liquid silicon in a crucible inside a reaction unit; (b) supplying solid silicon dioxide to the crucible, in which a pore area of the solid silicon dioxide in a pore size range of 1.7 nm to 300 nm calculated through a Barrett-Joyner-Halenda (BJH) gas phase adsorption-desorption analysis is 200 m²/g or more and an average pore size of the analyzed through desorption solid silicon dioxide after the BJH gas phase adsorption is 5 nm or less; (b-1) supplying metal and/or a metal compound including one or more elements of silicon, aluminum, calcium, potassium, lithium, magnesium, zirconium, nickel, manganese, zinc, and sodium that are metal raw materials to a metal chamber; (c) generating SiOx gas by liquid-solid reacting the liquid silicon and the solid silicon dioxide; (c-1) generating metal gas by phase transiting the metal raw material; (c-2) generating metal-SiOx gas by reacting the SiOx gas and the metal gas; and (d) depositing the metal-SiOx gas in a deposition unit.

Further, in operation (d), the metal-SiOx gas is deposited at a temperature of 500°C to 1,200°C, and the metal-SiOx gas includes one or more of a three-component compound represented by MₐSi_{b}O_{c} (M is one element selected from the group consisting of Al, Ca, K, Li, Mg, Zr, Ni, Mn, Zn, and Na, and when a stoichiometric ratio is converted to an integer, a is 1 to 6, b is 1 and 2, and c is 3 to 13), and a four-component compound represented by MₐM'_{a'}Si_{b}O_{c} (M is one element selected from the group consisting of Al, Ca, K, Li, Mg, Zr, Ni, Mn, Zn, and Na, M' is one element among the remaining non-selected elements in M, and when a stoichiometric ratio is converted to an integer, a+a' is 1 to 8, b is 1 to 4, and c is 3 to 20).

Yet another exemplary embodiment of the present invention provides a SiOx anode material including the SiOx prepared according to the method of preparing the SiOx.

Further, the SiOx anode material implements initial reversible efficiency of a lithium secondary battery of 75% or more, and implements a capacity of the lithium secondary battery of 1,250 mAh/g to 2,350 mAh/g.

### [Advantageous Effects]

According to the present invention, the present invention continuously prepares a SiOx by continuously maintaining a reaction contact point through a liquid-solid reaction of liquid silicon and solid silicon dioxide, so that it is possible to solve a problem of a quality deviation according to the process time compared to the existing solid-solid phase process, and improve the amount of SiOx produced.

Further, the present invention increases a reaction area of a raw material by using solid silicon dioxide having an appropriate range of porosity and specific surface area, so that it is possible to improve the amount of SiOx produced.

Further, the present invention simultaneously reacts metal gas during SiOx preparation, thereby preparing a metal-SiOx in a single device.

Further, the present invention provides a SiOx anode material which is capable of improving initial reversible efficiency and capacity of a lithium secondary battery.

### [Brief Description of Drawings]

FIG. 1 is a cross-sectional view of a SiOx preparing device 100 according to an exemplary embodiment of the present invention.
FIG. 2 is a cross-sectional view of a SiOx preparing device 100' according to another exemplary embodiment of the present invention.
FIG. 3 is a cross-sectional view of the SiOx preparing device 100 in which a metal chamber 50 is included in a reaction unit 20 according to the exemplary embodiment of the present invention.
FIG. 4 is a cross-sectional view of the SiOx preparing device 100' in which a metal chamber 50 is included in a reaction unit 20 according to another exemplary embodiment of the present invention.
FIG. 5 is a cross-sectional view of the SiOx preparing device 100 in which the metal chamber 50 is included outside the reaction unit 20 according to the exemplary embodiment of the present invention.
FIG. 6 is a cross-sectional view of the SiOx preparing device 100' in which the metal chamber 50 is included outside the reaction unit 20 according to another exemplary embodiment of the present invention.
FIG. 7 is a flowchart illustrating a SiOx preparing method according to an exemplary embodiment of the present invention.
FIG. 8 is a flowchart illustrating a SiOx preparing method according to another exemplary embodiment of the present invention.

### [Best Mode]

The present invention will be described in detail with reference to the accompanying drawings. Herein, the repeated description, and the detailed description for the publicly known function and configuration may be omitted so as to avoid unnecessarily obscuring the subject matter of the present invention. An embodiment of the present invention is provided to fully explain the present invention to those skilled in the art. Accordingly, shapes, sizes, and the like of the elements in the drawing may be exaggerated for clearer description.

In the entire specification, unless explicitly described to the contrary, the word "comprise" and variations such as "comprises" or "comprising", will be understood to imply the inclusion of stated elements but not the exclusion of any other elements.

Hereinafter, an exemplary embodiment is presented for helping the understanding of the present invention. However, the following exemplary embodiment is simply provided for more easy understanding of the present invention, and the contents of the present invention are not limited by the exemplary embodiment.

### <SiOx preparing device>

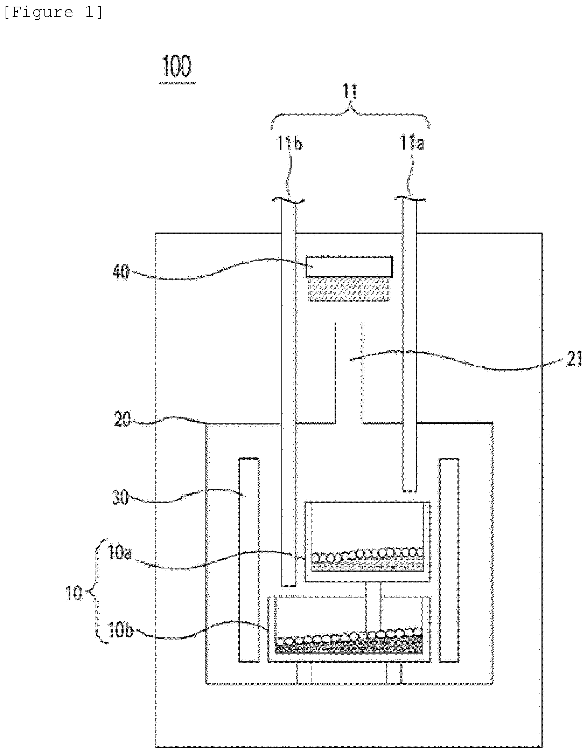

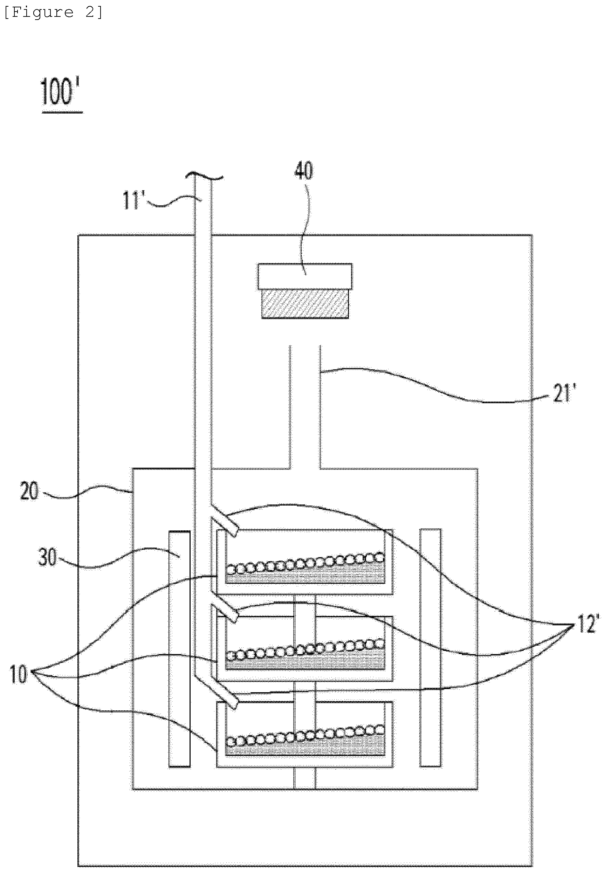

FIGS. 1 and 2 are cross-sectional views illustrating SiOx preparing devices 100 and 100' according to the present invention. Referring to FIGS. 1 and 2, each of the SiOx preparing devices 100 and 100' according to the present invention may include a crucible 10, a reaction unit 20, a heater 30, and a deposition unit 40.

The crucible 10 according to the present invention may provide a space in which a raw material is accommodated. One or more crucibles 10 may be present, and the crucibles 10 may be stacked in multiple stages in a vertical direction by setting a height of the crucible 10 low. When the crucibles 10 are stacked in multiple stages, a reaction area is increased, so that the amount of SiOx prepared may be improved. As the material of the crucible 10, graphite, quartz, and the like may be used, and the material is not specially limited, but the crucible 10 made of graphite may be preferably used.

In this case, the raw material is liquid silicon and a solid silicon dioxide, and when liquid silicon and a solid silicon dioxide are liquid-solid reacted, SiOx gas may be generated.

Herein, a pore area in the range of 1.7 nm to 300 nm calculated by a Barrett-Joyner-Halenda (BJH) gas phase adsorption-desorption analysis of the solid silicon dioxide may be 200 m²/g or more. When the pore area is 200 m²/g or less, the reaction area of the raw material is small, so that the amount of production is not significantly improved. In this case, when the pore area is increased through simple particle size reduction, a scattering problem may occur when the silicon dioxide raw material is added. Further, an average pore size of the desorbed solid silicon dioxide after the BJH gas phase adsorption becomes larger than 5 nm by the generation of the pore, to decrease a reaction area per unit volume and reduce production efficiency of the SiOx. Accordingly, when the pore area is 200 m²/g or more, the pore size may be 5 nm or less.

Further, the specific surface area of the solid silicon dioxide may be 300 m²/g or more. When the specific surface area of the solid silicon dioxide is less than 300 m²/g, the reaction area of the raw material is decreased to reduce the amount of production.

The pore area, the pore size, and the specific surface area of the solid silicon dioxide are the main factors for improving reactivity in the liquid-solid reaction. When the solid silicon dioxide is added to the liquid silicon, the reaction may occur in every area, so that as the pore area, the pore size, and the specific surface area increase, the reactivity increases, thereby improving the amount of SiOx produced. However, in the case where the specific surface area is increased by decreasing a diameter of the solid silicon dioxide through simple pulverization, a scattering problem may occur when the raw material is added, so that a problem may occur in the SiOx preparing devices 100 and 100', the silicon dioxide may be mixed in the prepared SiOx to degrade performance, and the amount of SiOx produced may be decreased. Accordingly, the diameter of the solid silicon dioxide may be 0.5 mm to 100 mm. When the diameter of the solid silicon dioxide is less than 0.5 mm, the scattering problem may occur when the raw material is added, and when the diameter of the solid silicon dioxide is more than 100 mm, molten silicon may be scattered. Further, a pipe diameter of an injection part 11 which injects the raw material, which will be described below, needs to be increased, so that the space utilization of the reaction unit 20 may be impaired.

The crucible 10 may continuously receive the raw material through the injection parts 11 and 11'. First, liquid silicon is prepared by injecting silicon to the crucible 10. As the silicon, solid silicon or liquid silicon may be injected, and when the solid silicon is injected, the silicon may be prepared by phase-transiting the solid silicon to liquid silicon by heating the solid silicon with the heater 30 which is to be described below. When the liquid silicon is prepared, the liquid silicon and the solid silicon dioxide are liquid-solid reacted by injecting the solid silicon dioxide to the crucible 10. When the liquid silicon and the solid silicon dioxide are exhausted according to the continuous reaction, the reaction may continue by continuously injecting each of the solid silicon or the liquid silicon and the solid silicon dioxide or the mixture of the solid silicon or the liquid silicon and the solid silicon dioxide to the crucible 10 through the injection parts 11 and 11'.

The injection part 11 according to the exemplary embodiment of the present invention may be provided one for each crucible 10 to inject the raw material. Referring to FIG. 1, the SiOx preparing device 100 according to the exemplary embodiment of the present invention includes two crucibles 10a and 10b stacked in the vertical direction, and two injection parts 11a and 11b directly corresponding to the crucibles 10a and 10b are provided according to the number of crucibles 10a and 10b in order to directly inject the raw material to the crucibles 10a and 10b, respectively. That is, one of the injection parts 11a and 11b is provided for each of the crucibles 10a and 10b to correspond to each other, so that it is possible to simultaneously inject the raw material to the crucibles 10a and 10b and it is possible to easily install the injection part.

The injection part 11' according to another exemplary embodiment of the present invention may be formed with a plurality of injection pipes 12' through which the raw material is discharged. One injection pipe 12' is provided for each crucible 10 so that the raw material may be directly injected. Referring to FIG. 2, the SiOx preparing device 100' according to another exemplary embodiment of the present invention includes three crucibles 10 stacked in the vertical direction, and three injection pipes 12' are formed on the injection part 11' and provided in the crucibles 10, respectively. That is, the injection pipe 12' is formed in a branch form branched from one injection part 11', so that even though one injection part 11' is provided, the raw material may be injected to all of the crucibles 10. Accordingly, the installation space of the injection part 11' is saved, so that the crucible 10 may be formed to be wider. Accordingly, it is possible to increase the amount of raw material injected and increase a reaction area, thereby achieving an effect that the amount of SiOx produced is increased.

The crucible 10 may be located inside the reaction unit 20 according to the present invention. SiOx gas may be generated by the reaction of the raw material inside the reaction unit 20, and the reaction unit 20 may provide a space that may temporarily accommodate SiOx gas before the SiOx gas is deposited in the deposition unit 40 which will be described below.

Further, the reaction unit 20 may be formed with a discharge part 21 in an upper portion thereof. The discharge part 21 may discharge the SiOx gas produced inside the reaction unit 20 to the deposition unit 40.

The heater 30 according to the present invention may be formed inside the reaction unit 20 to heat the reaction unit 20. In this case, liquid silicon may be prepared by setting a temperature of the heater 30 to be equal to or higher than a melting point of silicon, preferably, a temperature of 1,400°C to 2,000°C. When the temperature is less than 1,400°C, silicon is not completely melted, so that it is impossible to prepare liquid silicon, and when the temperature is higher than 2,000°C, there may be a problem in that the heat-up time to reach and maintain a target temperature and the cooling time to reach a process termination are excessively long due to the high insulation effect. Since the silicon is a liquid phase and liquid-solid reacts with solid silicon dioxide, silicon may be used as a raw material without a limitation of the specific surface area, porosity, and a diameter of silicon. Further, in the liquid-solid reaction, a reaction contact point between the raw materials of the liquid silicon and the solid silicon dioxide may be continuously maintained. Further, since the reaction occurs only on the interface of the liquid silicon and the solid silicon dioxide, the reaction amount is increased by increasing a reaction area of the interface by stacking the low crucibles 10 in multiple stages to improve the amount of SiOx gas produced.

The deposition unit 40 according to the present invention may deposit gas generated in the reaction unit 20. The deposition unit 40 is positioned in the upper portion of the discharge part 21, and may deposit SiOx gas by using a metal plate and collect the deposited SiOx gas as SiOx powder. Herein, as long as the metal plate is capable of depositing the SiOx gas, the material of the metal plate is not specially limited. The deposition unit 40 may deposit SiOx gas at a deposition temperature of 500°C to 1,200°C. When the deposition temperature is lower than 500°C, the SiOx gas is rapidly cooled and adheres as nano particles having a very high specific surface area, so that an oxidation value (x) of SiOx (SiOx) by the surface oxidation may increase, and when the deposition temperature is higher than 1,200°C, the deposited SiOx causes the excessive growth of silicon crystal grains due to the additional heat treatment effect in the deposition unit 40, and when the SiOx is applied to the anode material of the lithium secondary battery, there may occur a problem in that a capacity maintenance rate during charging/discharge is degraded.

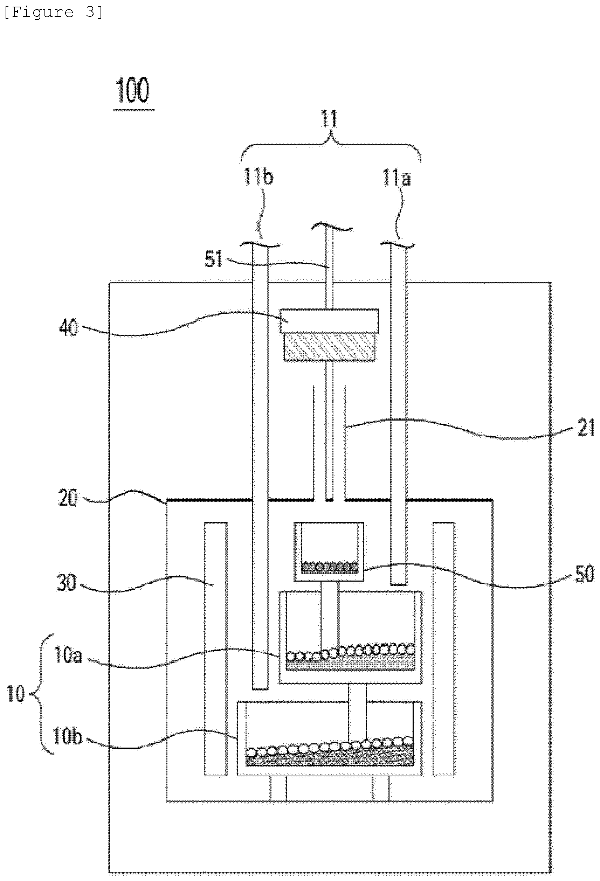

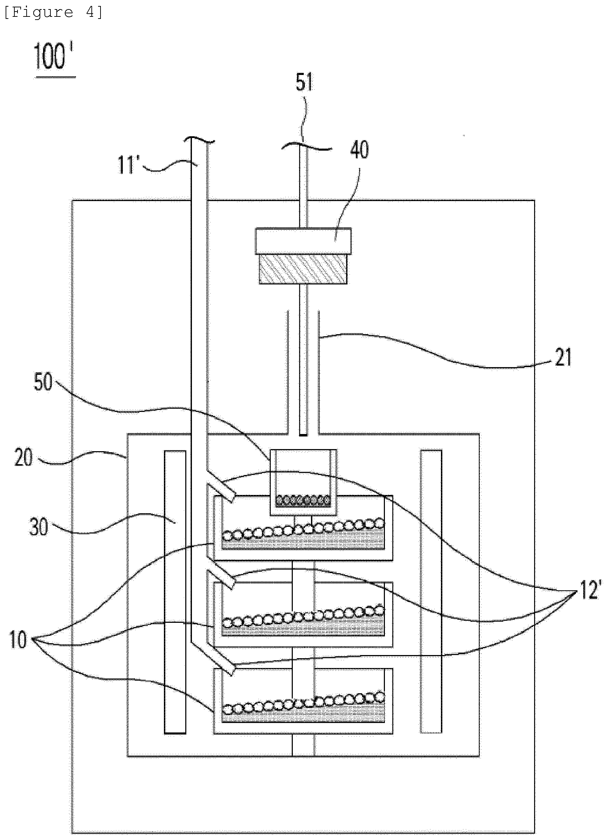

FIGS. 3 to 6 are cross-sectional views of the SiOx preparing devices 100 and 100' including the metal chamber 50 according to the present invention. Referring to FIGS. 3 and 4, the SiOx preparing devices 100 and 100' according to the present invention may further include the metal chamber 50 and a metal injection part 51.

The metal chamber 50 according to the present invention may provide a space in which metal and/or a metal compound that is a metal raw material is accommodated.

The metal raw material may be selected from metal and/or metal compounds which thermodynamically and reversibly react when reacting with SiOx gas have vapor pressure equal to or higher than the process pressure during reduction, and are capable of improving capacity. The metal may include one or more of silicon, aluminum, calcium, potassium, lithium, magnesium, zirconium, nickel, manganese, zinc, and sodium. The metal compound may be one or more selected from the group consisting of oxides, hydroxides, carbonates, and organometallic precursors of a metal element including one or more of silicon, aluminum, calcium, potassium, lithium, magnesium, zirconium, nickel, manganese, zinc, and sodium. The metal raw material may be phase-transited to metal gas by heating and react with the SiOx gas previously generated in the reaction unit 20. When the metal gas reacts with the SiOx gas, metal-SiOx gas that is a silicate compound may be generated. When the generated metal-SiOx gas is deposited in the deposition unit 40 and is collected as powder and the power is used as the anode material of the lithium secondary battery, it is possible to improve initial charge/discharge efficiency, performance, charge/discharge capacity, and capacity maintenance rate of the lithium secondary battery.

Herein, the metal chamber 50 may continuously receive the metal raw material through the metal injection part 51. The metal injection part 51 may inject one or more metal raw materials, and when two or more types of metal raw materials are injected, the metal raw materials may be injected into the metal chamber 50 regardless of an injection order and a mixing method.

The metal chamber 50 according to the exemplary embodiment of the present invention may be located inside the reaction unit 20. The metal chamber 50 may be heated by the heater 30 to phase-transit the metal raw material to metal gas. Referring to FIGS. 3 and 4, it can be seen that the metal chamber 50 inside the reaction unit 20 is located at the topmost end of the crucibles 10 stacked in multiple stages. When the reaction unit 20 is heated, the liquid silicon and the solid silicon dioxide are reacted in the crucible 10 located in the lower portion to generate SiOx gas, and the metal raw material is phase-transited to metal gas. Then, the SiOx gas and the metal gas may gas-gas react to generate metal-SiOx gas. Accordingly, it is possible to prepare homogeneous metal-SiOx gas with a single process without a subsequent process.

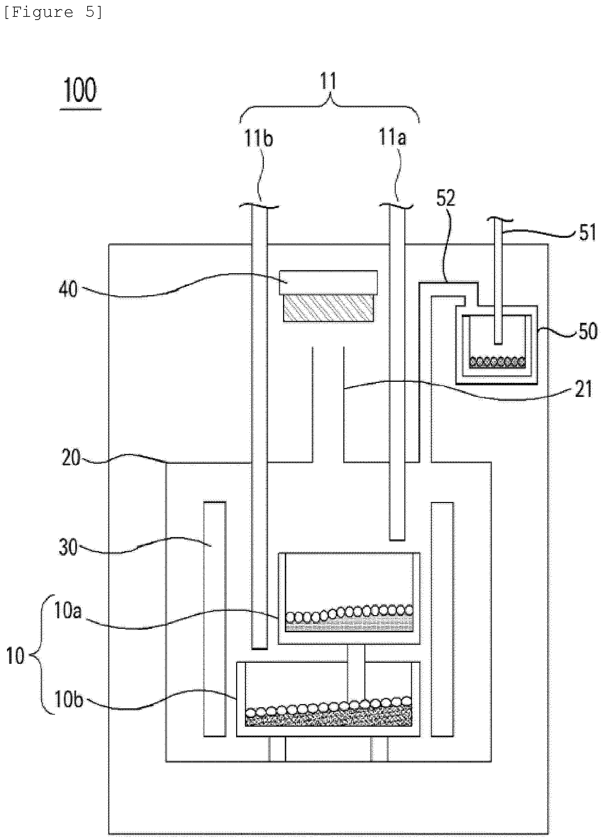

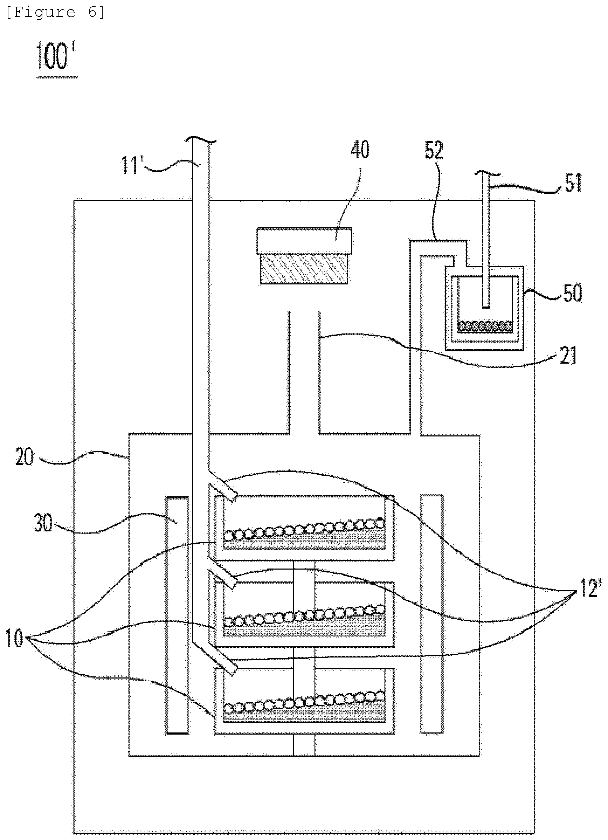

The metal chamber 50 according to another exemplary embodiment of the present invention may be located outside the reaction unit 20. Referring to FIGS. 5 and 6, it can be seen that the metal chamber 50 is located outside the reaction unit 20, and is connected with the reaction unit 20 through a metal gas injection part 52. The metal chamber 50 may be heated by a metal chamber heater (not illustrated) to phase-transit the metal raw material to metal gas. The generated metal gas is injected to the reaction unit 20 through the metal gas injection part 52 formed at one side of the metal chamber 50 and gas-gas reacts with the previously generated SiOx gas to generate metal-SiOx gas.

### <SiOx preparing method>

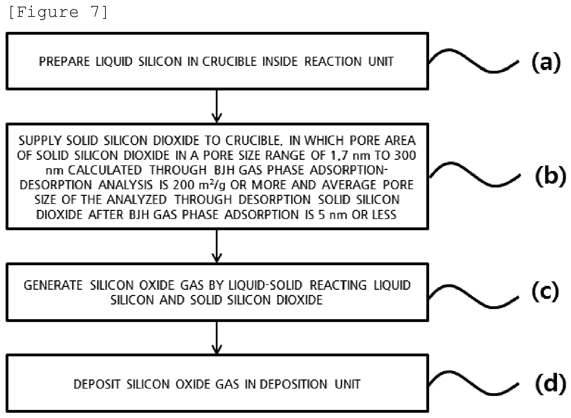

FIG. 7 is a flowchart illustrating a SiOx preparing method according to an exemplary embodiment of the present invention.

The SiOx preparing method according to the exemplary embodiment of the present invention may include operations (a), (b), (c), and (d).

In operation (a) according to the exemplary embodiment of the present invention, liquid silicon may be prepared in the crucible 10 inside the reaction unit 20. In this case, the prepared silicon is a liquid phase and liquid-solid reacts with solid silicon dioxide, so that silicon may be used as a raw material without a limitation of the specific surface area, porosity, and a diameter of silicon. Silicon may be added to the crucible 10 in the form of solid silicon or liquid silicon, and when the solid silicon is added, the liquid silicon may be prepared by phase-transiting the solid silicon to liquid silicon by heating the solid silicon through the heater 30. In this case, liquid silicon may be prepared by setting a heating temperature to be equal to or higher than a melting point of silicon, preferably, a temperature of 1,400°C to 2,000°C. When the temperature is less than 1,400°C, solid silicon is not melted, so that it is impossible to prepare liquid silicon, and when the temperature is higher than 2,000°C, there may be a problem in that the heat-up time to reach and maintain a target temperature and the cooling time to reach a process termination are excessively long due to the high insulation effect.

In operation (b) according to the exemplary embodiment of the present invention, solid silicon dioxide may be supplied to the crucible 20.

Herein, a pore area in the range of 1.7 nm to 300 nm calculated by a Barrett-Joyner-Halenda (BJH) gas phase adsorption-desorption analysis of the solid silicon dioxide may be 200 m²/g or more. When the pore area is 200 m²/g or less, the reaction area of the raw material is small, so that the amount of production is not significantly improved. In this case, when the pore area is increased through simple particle size reduction, a scattering problem may occur when the silicon dioxide raw material is added. Further, after the BJH gas phase adsorption by the generation of the pore, an average pore size of the desorption becomes larger than 5 nm, to decrease a reaction area per unit volume and reduce production efficiency of the SiOx. Accordingly, when the pore area is 200 m²/g or more, it is preferable to form the pore size to 5 nm or less.

Further, the specific surface area of the solid silicon dioxide may be 300 m²/g or more. When the specific surface area of the solid silicon dioxide is less than 300 m²/g or more, the reaction area of the raw material is decreased to reduce the amount of production.

The pore area, the pore size, and the specific surface area of the solid silicon dioxide are the main factors for improving reactivity in the liquid-solid reaction. When the solid silicon dioxide is added to the liquid silicon, the reaction may occur in every area, so that as the pore area, the pore size, and the specific surface area increase, the reactivity increases, thereby improving the amount of SiOx produced. However, in the case where the specific surface area is increased by decreasing a diameter of the solid silicon dioxide through simple pulverization, a scattering problem may occur when the raw material is added, so that a problem may occur in the SiOx preparing devices 100 and 100', the silicon dioxide may be mixed in the prepared SiOx to degrade performance, and the amount of SiOx produced may be decreased. Accordingly, the diameter of the solid silicon dioxide may be 0.5 mm to 100 mm. When the diameter of the solid silicon dioxide is less than 0.5 mm, the scattering problem may occur when the raw material is added, and when diameter of the solid silicon dioxide is more than 100 mm, molten silicon may be scattered. Further, a pipe diameter of the injection part 11 which injects the raw material, needs to be increased, so that the space utilization of the reaction unit 20 may be impaired.

In operation (c) according to the exemplary embodiment of the present invention, SiOx gas may be generated by reacting the liquid silicon and the solid silicon dioxide. The liquid silicon and the solid silicon dioxide may generate SiOx gas through the reaction represented by Chemical Formula 1 below.

[Chemical Formula 1] Si(l) + SiO₂(s) → 2SiO(g)

The liquid silicon and the solid silicon dioxide liquid-solid react and a reaction contact point between the liquid silicon and the solid silicon dioxide may be continuously maintained. Further, since the reaction occurs only on the interface of the liquid silicon and the solid silicon dioxide, the amount of SiOx gas produced may be improved by increasing a reaction area by stacking the low crucibles 10 in multiple stages. Further, in the liquid-solid reaction, the process temperature and the pressure are freely controlled, so that it is possible to prepare the SiOx having an oxidation value (x) of SiOx (SiOₓ) of 1.0 or less by using vapor pressure of silicon.

The value of x of the SiOx (SiOₓ) generated through operation (c) satisfies 0.6 to 1.1 as a result of the measurement through an X-ray Photoelectron Spectroscopy (XPS) analysis and an Energy Dispersive X-ray Spectroscopy (EDXS) analysis of a Scanning Electron Microscope (SEM) device. When the value of x is less than 0.6, there may occur a problem in that a volume is excessively increased, and when the value of x is larger than 1.1, there may occur a problem in that initial reversible efficiency of the lithium secondary battery deteriorates.

When the liquid silicon and the solid silicon dioxide are exhausted according to the continuous reaction in operation (c), the reaction may be continuously maintained by continuously injecting each of solid silicon or liquid silicon and solid silicon dioxide or a mixture of solid silicon or liquid silicon and solid silicon dioxide to the crucible 10 through the injection part 11 and 11'.

In operation (d) according to the exemplary embodiment of the present invention, the SiOx gas produced in the reaction unit 20 may be discharged through the discharge part 21 and deposited in the deposition unit 40, and the deposited SiOx gas may be collected as SiOx powder. The deposition unit 40 may deposit SiOx gas at a deposition temperature of 500°C to 1,200°C. When the deposition temperature is lower than 500°C, the SiOx gas is rapidly cooled and adheres as nano particles having a very high specific surface area, so that an oxidation value (x) of SiOx (SiOx) by the surface oxidation may increase, and when the deposition temperature is higher than 1,200°C, the deposited SiOx causes the excessive growth of silicon crystal grains due to the additional heat treatment effect in the deposition unit 40, and when the silicon crystal grains are applied to the anode material of the lithium secondary battery, there may occur a problem in that a capacity maintenance rate during charging/discharge is degraded.

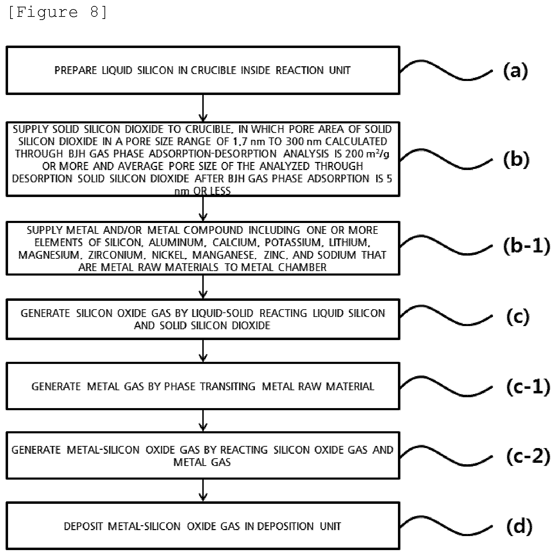

FIG. 8 is a flowchart illustrating a SiOx preparing method according to another exemplary embodiment of the present invention. The SiOx preparing method according to another exemplary embodiment of the present invention may include operations (a), (b), (b-1), (c), (c-1), (c-2), and (d) .

Operations (a) and (b) according to another exemplary embodiment of the present invention are the same as operations (a) and (b) according to the foregoing exemplary embodiment of the present invention, so that the descriptions thereof will be omitted.

In operation (b-1) according to another exemplary embodiment of the present invention, metal and/or a metal compound including one or more elements of silicon, aluminum, calcium, potassium, lithium, magnesium, zirconium, nickel, manganese, zinc, and sodium that are the metal raw materials may be supplied to the metal chamber 50. Herein, the metal compound may be one or more selected from the group consisting of oxides, hydroxides, carbonates, and organometallic precursors of a metal element including one or more of silicon, aluminum, calcium, potassium, lithium, magnesium, zirconium, nickel, manganese, zinc, and sodium. The metal raw material may be continuously injected to the metal chamber 50 through the metal injection part 51.

Operation (c) according to another exemplary embodiment of the present invention is the same as operation (c) according to the foregoing exemplary embodiment of the present invention, so that the description thereof will be omitted.

In operation (c-1) according to another exemplary embodiment of the present invention, the metal raw material may be phase-transited to metal gas by heating the metal raw material. The metal chamber 50 may be located inside or outside the reaction unit 20. When the metal chamber 50 is located inside the reaction unit 20, the metal chamber 50 may receive heat by the heater 30, so that the metal raw material may be phase-transited to metal gas. However, when the metal chamber 50 is located outside the reaction unit 20, the metal raw material may be heated through the metal chamber heater (not illustrated) to be phase-transited to metal gas, and the metal gas may be injected into the reaction unit 20 through the metal gas injection part 50.

In operation (c-2) according to another exemplary embodiment of the present invention, the SiOx gas produced in operation (c) and the metal gas generated in operation (c-1) may gas-gas phase react to generate metal-SiOx gas. Accordingly, after the SiOx gas is generated in operation (c), the metal-SiOx gas may be generated inside the reaction unit 20 with a single process without an additional device or a subsequent process, so that it is possible to generate the metal-SiOx gas having homogeneous composition and excellent quality.

The metal-SiOx gas produced in operation (c-2) is a silicate compound, and may include a three-component compound represented by MₐSi_{b}O_{c}. M may be selected from Ca, K, Li, Mg, Zr, Ni, Mn, Zn, and Na that are the metal elements which have high capacities when are bonded to the SiOx and are capable of reducing the SiOx (SiOₓ). In this case, when the stoichiometric ratio is converted to an integer, a is 1 to 6, b is 1 and 2, and c is 3 to 13. When a is less than 1, ion conductivity and electric conductivity are not greatly improved, and when a is larger than 6, crystallization may be degraded. When b is less than 1, a capacity of the lithium secondary battery is not greatly increased, and when b is larger than 2, ion conductivity and electric conductivity may be decreased. When c is less than 3, crystallization of MₐSi_{b}O_{c} may be degraded, and when c is larger than 13, lithium ion storage capability may be degraded.

Further, the metal-SiOx gas may include a four-component compound represented by MₐM'_{a'}Si_{b}O_{c}. M and M' may be selected from Ca, K, Li, Mg, Zr, Ni, Mn, Zn, and Na that are the metal elements which have high capacities when are bonded to the SiOx and are capable of reducing the SiOx (SiOₓ). In this case, a or a+a' is 1 to 8, b is 1 to 4, and c is 3 to 20. When a or a+a' is less than 1, ion conductivity and electric conductivity are not greatly improved, and when a is larger than 8, crystallization may be degraded. When b is less than 1, a capacity of the lithium secondary battery is not greatly increased, and when b is larger than 4, ion conductivity and electric conductivity may be decreased. When c is less than 3, crystallization of MₐM'_{a'}Si_{b}O_{c} may be degraded, and when c is larger than 20, lithium ion storage capability may be degraded.

In operation (d) according to the exemplary embodiment of the present invention, the metal-SiOx gas may be discharged through the discharge part 21 and deposited in the deposition unit 40, and the deposited metal-SiOx gas may be collected as metal-SiOx powder. The deposition unit 40 may deposit metal-SiOx gas at a deposition temperature of 500°C to 1,200°C. When the deposition temperature is lower than 500°C, the metal-SiOx gas is rapidly cooled and adheres as nano particles having a very high specific surface area, so that an oxidation value (x) of SiOx (SiOx) by the surface oxidation may increase, and when the deposition temperature is higher than 1,200°C, the deposited metal-SiOx causes the excessive growth of silicon crystal grains due to the additional heat treatment effect in the deposition unit 40, and when the metal-SiOx is applied to the anode material of the lithium secondary battery, there may occur a problem in that a capacity maintenance rate during charging/discharge is degraded.

The SiOxs of Comparative Examples 1 to 4 and Examples 1 to 3 were prepared by varying the specification of solid silicon dioxide according to the SiOx preparing device and the SiOx preparing method, and a production speed of the SiOx according to the pore area, specific surface area, and diameter of solid silicon dioxide was checked by comparing the prepared SiOxs.

First, the production speeds of the SiOxs according to the pore area and the specific surface area of the solid silicon dioxide were compared. All of the experiments were conducted under the same condition except for the pore area, the pore size, and the specific surface area of the solid silicon dioxide.

### <Comparative Example 1>

A SiOx were prepared by using a raw material of a silicon dioxide having a pore area of 4.6356 m²/g, a pore size of 8.9452 nm, and a specific surface area of 4.5794 m²/g, and a production speed was checked.

### <Comparative Example 2>

A SiOx were prepared by using a raw material of a silicon dioxide having a pore area of 149.9326 m²/g, a pore size of 11.3544 nm, and a specific surface area of 200 m²/g, and a production speed was checked.

### <Example 1>

A SiOx were prepared by using a raw material of a silicon dioxide having a pore area of 407.1888 m²/g, a pore size of 2.4298 nm, and a specific surface area of 716.7277 m²/g, and a production speed was checked.

**[Table 1]**

| | Pore area of SiO₂ (m²/g) | Pore size of SiO₂ (nm) | Specific surface area of SiO₂ (m²/g) | Production speed of SiOₓ (g/h) |
|---|---|---|---|---|
| Comparative Example 1 | 4.6356 | 8.9452 | 4.5794 | 483 |
| Comparative Example 2 | 149.9326 | 11.3544 | 223 | 3,684 |
| Example 1 | 407.1888 | 2.4298 | 716.7277 | 8,972 |

In Comparative Example 1, the pore area and the specific surface area of the silicon dioxide were low, so that reactivity was decreased. Accordingly, the production speed of the SiOx was as low as 483 g/h.

In Comparative Example 2, the nano silicon dioxide having the larger pore area and specific surface area of the silicon dioxide than those of Comparative Example 1 was used as the raw material. However, it is difficult to control the process due to the scattering of the raw material of the silicon dioxide of Comparative Example 2, the scattered powder is mixed in the prepared SiOx to cause a performance degradation problem, and the amount of production is decreased compared to the addition due to the non-reaction of the corresponding scattered powder. Further, the pore size is larger than that of the ultra-porous silicon dioxide of Example 1, so that a reaction area per unit volume is decreased to decrease a production speed.

In Example 1, the ultra-porous silicon dioxide was used as the raw material, and had a smaller pore size than that of the nano silicon dioxide of Comparative Example 2, so that a pore area was increased. Accordingly, it can be seen that the specific surface area is also increased. Accordingly, it can be seen that both the pore area and the specific surface area were increased compared to the nano silicon dioxide of Comparative Example 2, so that the reactivity was increased and the production speed of the SiOx was significantly improved to 8,972 g/h.

Accordingly, it can be seen that when the pore area and the specific surface area of the solid silicon dioxide are increased, the production speed of the SiOx is improved.

Next, the production speeds of the SiOxs according to the specific surface area and the diameter of the solid silicon dioxide were compared. All of the experiments were conducted under the same condition except for the specific surface area and the diameter of the solid silicon dioxide.

### <Comparative Example 3>

A SiOx was prepared by using a silicon dioxide having a diameter of 3 mm and a specific surface area of 4.5794 m²/g as a raw material and a production speed was checked.

### <Comparative Example 4>

A SiOx was prepared by using a silicon dioxide having a diameter of 30 mm and a specific surface area of 223 m²/g as a raw material and a production speed was checked.

### <Example 2>

A silicon dioxide was used after being granulated to have a diameter of 3 mm from a diameter of 30 nm, and a SiOx was prepared by using the silicon dioxide having a specific surface area of 201 m²/g as a raw material and a production speed was checked.

### <Example 3>

A SiOx was prepared by using an ultra-porous silicon dioxide having a diameter of 3 mm and a specific surface area of 716 m²/g as a raw material and a production speed was checked.

**[Table 2]**

| | Diameter of SiO₂ (µm) | Specific surface area of SiO₂ (m²/g) | Production speed of SiOₓ (g/h) |
|---|---|---|---|
| Comparative Example 3 | 3,000 | 4.5794 | 483 |
| Comparative Example 4 | 0.03 | 223 | 3,684 |
| Example 2 | 3,000 | 201 | 4,535 |
| Example 3 | 3,000 | 716 | 8, 972 |

In Comparative Example 3, it can be seen that the specific surface area of the silicon dioxide was low, so that reactivity was decreased and the production speed of the SiOx was as very low as 483 g/h.

In Comparative Example 4, the diameter of the silicon dioxide was smaller than that of Comparative Example 3, so that the specific surface area was increased and thus the reactivity was increased, thereby improving the production speed of the SiOx to 3,684 g/h. However, the diameter of the silicon dioxide raw material was significantly decreased to 30 nm to cause a raw material scattering problem, so that it is difficult to control the process and performance of the SiOx may deteriorate.

In Example 2, in order to prevent the raw material from being scattered, the silicon dioxide was used after being granulated to have a diameter of 3 mm from a diameter of 30 nm. In this case, it can be seen that the diameter of the SiOx was 3 mm which was the same as that of Comparative Example 3, but the specific surface area was significantly increased to 201 m²/g, so that the production speed was also significantly improved to 4,535g/h. Further, the nm-sized silicon dioxide was granulated into the mm-sized silicon dioxide and used, so that the scattering problem of the silicon dioxide particles does not occur compared to Comparative Example 4, so that performance and the amount of production of the SiOx are not decreased.

In Example 4, the ultra-porous silicon dioxide was used as the raw material and the specific surface area was further increased compared to Example 3, so that it can be seen that the production speed of the SiOx was further improved to 8,972 g/h.

Accordingly, it can be seen that when the specific surface area and the diameter of the solid silicon dioxide are increased, the production speed of the SiOx is improved.

### <SiOx anode material>

A SiOx anode material according to the present invention may include the SiOx prepared according to the SiOx preparing method according to the exemplary embodiment or another exemplary embodiment of the present invention.

When the SiOx prepared through the liquid-solid preparing method is applied to a negative electrode of a lithium secondary battery, the following electrochemical characteristics are implemented.

Initial reversible efficiency that is a ratio (D/C) of a capacity (D) by which the SiOx anode material is lithium-dealloyed at a constant current up to 1.5 V to a capacity (C) by which a SiOx anode material is lithium-alloyed at a constant current and a constant voltage of up to 0.005 V using lithium metal as an opposite pole is implemented to be 75% or more.

Further, a capacity by which the SiOx anode material is lithium-alloyed at the constant current and the constant voltage of up to 0.005 V using lithium metal as the opposite pole and then is lithium-dealloyed at the constant current up to 1.5 V is implemented to be 1,250 mAh/g to 2,350 mAh/g.

Although the present invention has been described with reference to the exemplary embodiments of the present invention, but it can be understood that those skilled in the art may variously modify and change the present invention without departing from the spirit and scope of the present invention described in the accompanying claims.

## Claims

1. A device for preparing a SiOx, comprising:
one or more crucibles configured to provide a space in which a raw material is accommodated;
a reaction unit inside which the crucible is located;
a heater configured to heat the reaction unit; and
a deposition unit configured to deposit a gas generated in the reaction unit,
wherein the raw material is liquid silicon and solid silicon dioxide, and SiOx gas is generated by a liquid-solid reaction of the liquid silicon and the solid silicon dioxide, and a pore area of the solid silicon dioxide in a pore size range of 1.7 nm to 300 nm calculated through a Barrett-Joyner-Halenda (BJH) gas phase adsorption-desorption analysis is 200 m²/g or more and an average pore size of the analyzed through desorption solid silicon dioxide after the BJH gas phase adsorption is 5 nm or less.

2. The device of claim 1, further comprising:
a metal chamber in which a metal raw material is located,
wherein the metal raw material is metal and/or a metal compound, and the metal raw material is phase-transited to metal gas by heating, and metal-SiOx gas is generated by reacting the metal gas and the SiOx gas.

3. The device of claim 2, wherein the metal includes one or more of silicon, aluminum, calcium, potassium, lithium, magnesium, zirconium, nickel, manganese, zinc, and sodium, and
the metal compound is one or more selected from the group consisting of oxides, hydroxides, carbonates, and organometallic precursors of a metal element including one or more of silicon, aluminum, calcium, potassium, lithium, magnesium, zirconium, nickel, manganese, zinc, and sodium.

4. The device of claim 1, wherein the solid silicon dioxide has a specific surface area of 300 m²/g or more.

5. The device of claim 1, wherein the solid silicon dioxide has a diameter of 0.5 mm to 100 mm.

6. The device of claim 1, wherein the crucible is stacked in one or more stages in a vertical direction.

7. The device of claim 1, wherein the liquid silicon is formed by phase transiting solid silicon by heating.

8. A method of preparing a SiOx, comprising:
(a) preparing liquid silicon in a crucible inside a reaction unit;
(b) supplying solid silicon dioxide to the crucible, in which a pore area of the solid silicon dioxide in a pore size range of 1.7 nm to 300 nm calculated through a Barrett-Joyner-Halenda (BJH) gas phase adsorption-desorption analysis is 200 m²/g or more and an average pore size of the analyzed through desorption solid silicon dioxide after the BJH gas phase adsorption is 5 nm or less;
(c) generating SiOx gas by liquid-solid reacting the liquid silicon and the solid silicon dioxide; and
(d) depositing the SiOx gas in a deposition unit.

9. A method of preparing a SiOx, comprising:
(a) preparing liquid silicon in a crucible inside a reaction unit;
(b) supplying solid silicon dioxide to the crucible, in which a pore area of the solid silicon dioxide in a pore size range of 1.7 nm to 300 nm calculated through a Barrett-Joyner-Halenda (BJH) gas phase adsorption-desorption analysis is 200 m²/g or more and an average pore size of the analyzed through desorption solid silicon dioxide after the BJH gas phase adsorption is 5 nm or less;
(b-1) supplying metal and/or a metal compound including one or more elements of silicon, aluminum, calcium, potassium, lithium, magnesium, zirconium, nickel, manganese, zinc, and sodium that are metal raw materials to a metal chamber;
(c) generating SiOx gas by liquid-solid reacting the liquid silicon and the solid silicon dioxide;
(c-1) generating metal gas by phase transiting the metal raw material;
(c-2) generating metal-SiOx gas by reacting the SiOx gas and the metal gas; and
(d) depositing the metal-SiOx gas in a deposition unit.

10. The method of claim 8, wherein the solid silicon dioxide has a specific surface area of 300 m²/g or more.

11. The method of claim 8, wherein the solid silicon dioxide has a diameter of 0.5 mm to 100 mm.

12. The method of claim 8, wherein in operation (d), the SiOx gas is deposited at a temperature of 500°C to 1,200°C, and
the SiOx gas is SiOₓ (x is 0.6 to 1.1).

13. The method of claim 9, wherein in operation (d), the metal-SiOx gas is deposited at a temperature of 500°C to 1,200°C, and
the metal-SiOx gas includes one or more of a three-component compound represented by MₐSi_{b}O_{c} (M is one element selected from the group consisting of Al, Ca, K, Li, Mg, Zr, Ni, Mn, Zn, and Na, and when a stoichiometric ratio is converted to an integer, a is 1 to 6, b is 1 and 2, and c is 3 to 13), and a four-component compound represented by MₐM'_{a'}Si_{b}O_{c} (M is one element selected from the group consisting of Al, Ca, K, Li, Mg, Zr, Ni, Mn, Zn, and Na, M' is one element among the remaining non-selected elements in M, and when a stoichiometric ratio is converted to an integer, a+a' is 1 to 8, b is 1 to 4, and c is 3 to 20).

14. A SiOx anode material comprising the SiOx prepared according to the method of preparing the SiOx of claim 8.

15. The SiOx anode material of claim 14, wherein the SiOx anode material implements initial reversible efficiency of a lithium secondary battery of 75% or more, and implements a capacity of the lithium secondary battery of 1,250 mAh/g to 2,350 mAh/g.
